# FASCICULE DE BREVET EUROPEEN

(11) **EP 1 032 296 B1**
(45) Date de publication et mention de la délivrance du brevet: **28.12.2005**
(21) Numéro de dépôt: 99946243.5
(22) Date de dépôt: 27.09.1999
(51) Int. Cl.: A47J 27/082, A47J 36/16

(54) **APPAREIL DE CUISSON SOUS PRESSION COMPORTANT DES MOYENS DE SUPPORT D'UN PANIER DE CUISSON EN POSITION HAUTE**
DRUCKKOCHGERÄT MIT MITTELN ZUM UNTERSTÜTZEN EINES KOCHBEHÄLTERS IN EINER ERHÖHTEN POSITION
PRESSURE COOKER COMPRISING MEANS SUPPORTING A COOKING BASKET IN HIGH POSITION

(30) Priorité: 28.09.1998 FR 9812260
(43) Date de publication de la demande: 06.09.2000
(73) Titulaire: SEB S.A., 69132 Ecully Cedex (FR)
(72) Inventeur: POTY, Jean-François, F-21000 Dijon (FR)
(74) Mandataire: Martin, Didier Roland Valéry
(86) Numéro de dépôt international: PCT/FR1999/002295
(87) Numéro de publication internationale: WO 2000/018278

(56) Documents cités:
- CH-A- 112 379
- DE-A- 3 506 058
- DE-C- 384 035
- FR-A- 627 562
- FR-A- 1 203 589

## Description

### DOMAINE TECHNIQUE

La présente invention se rapporte aux appareils de cuisson sous pression, tel que des autocuiseurs, comportant des dispositifs pour maintenir un panier de cuisson en position haute dans la cuve de l'appareil de cuisson.

La présente invention concerne un appareil de cuisson sous pression, en particulier un autocuiseur, comportant une cuve avec des poignées, un couvercle et des moyens de support d'un panier de cuisson, lesdits moyens étant disposés vers la partie supérieure de la cuve pour assurer une position haute du panier dans ladite cuve.

### TECHNIQUE ANTERIEURE

Pour permettre à l'utilisateur d'un appareil de cuisson sous pression de réaliser, au choix, une cuisson d'aliments exclusivement à la vapeur, ou une cuisson d'aliments immergés dans le liquide contenu dans la cuve de l'appareil, ou encore une cuisson mixte combinant par exemple une cuisson de viande en immersion et une cuisson de légumes à la vapeur, il est déjà connu d'équiper les appareils de cuisson avec un dispositif permettant au panier de cuisson d'occuper sélectivement une position haute ou une position basse en appui contre le fond de la cuve de l'appareil.

Il est ainsi déjà connu d'avoir recours à un support amovible, formant un équipement supplémentaire à l'appareil de cuisson, et réalisé sous la forme d'un fil d'acier, par exemple en inox, que l'utilisateur met en place sur le fond de la cuve lorsqu'il veut réaliser une cuisson à la vapeur. Le support ainsi réalisé et positionné en fond de cuve sert d'appui au panier de cuisson qui est ainsi maintenu en position stable et à faible distance, par exemple quelques centimètres, au-dessus du fond de la cuve et du liquide, permettant ainsi d'assurer la cuisson à la vapeur d'un aliment, tel que du riz par exemple.

De tels dispositifs donnent généralement satisfaction quant au but recherché, mais souffrent d'inconvénients. En particulier, il s'avère que ce mode de support du panier de cuisson implique la réalisation d'un équipement supplémentaire, formant un accessoire annexe à l'appareil de cuisson, ce qui, en soi, constitue déjà une contrainte pour l'utilisateur. Ce dernier doit, en effet, notamment veiller, d'une part, à ne pas égarer cet accessoire supplémentaire, et, d'autre part, veiller également à ranger correctement cet accessoire lorsqu'il n'est pas utilisé. Par ailleurs, ces dispositifs s'avèrent inappropriés à la cuisson mixte d'aliments en raison de la faible hauteur du support conduisant à une position trop basse du panier. Il n'est en outre pas concevable d'envisager, dans le cadre d'une cuisson mixte du type couscous par exemple, la cuisson en immersion d'un aliment (viande par exemple) avec une pièce métallique, i.e. le support, en place dans le liquide au sein même de l'aliment. Ceci présente un inconvénient non négligeable, réduisant la polyvalence d'emploi des autocuiseurs de ce type, alors même que de nombreux plats, tels le couscous par exemple, requièrent un réchauffage mixte ou une cuisson mixte impliquant un temps de cuisson différencié des aliments.

C'est la raison pour laquelle il a déjà été proposé de réaliser des dispositifs de support du panier de cuisson qui soient intégrés dans la cuve même de l'appareil de cuisson et qui permettent ainsi une cuisson à la vapeur et une cuisson mixte.

Il est ainsi déjà connu, pour les autocuiseurs à étrier, d'utiliser les moyens de fixation des oreillons du système de verrouillage en tant que moyens de support du panier de cuisson en position haute. En effet, les oreillons sont fixés sur les parois externes de la cuve par l'intermédiaire de moyens de fixation du genre rivets, traversant de part et d'autre la paroi de cuve. Sur la face interne de la cuve, les moyens de fixation se projettent nécessairement hors de la génératrice interne de la cuve et peuvent ainsi servir de moyens de support au panier de cuisson lorsqu'il occupe sa position haute. Le panier de cuisson comporte par ailleurs une série d'au moins deux dégagements ménagés dans son rebord périphérique supérieur afin de pouvoir descendre le panier dans sa position basse en esquivant les moyens de fixation formant le support.

Cette solution technique connue donne également satisfaction, mais souffre de divers inconvénients. Ainsi, il s'avère que la nécessité d'avoir recours à plusieurs perçages localisés de la paroi de la cuve peut être à l'origine de l'apparition d'un problème général d'étanchéité de l'appareil lié à la présence de microfuites. Par ailleurs, l'aspect visuel de la face interne de la cuve n'est pas particulièrement esthétique puisque l'on aperçoit directement les moyens de fixation alors même que ces derniers peuvent, en raison du procédé même de fabrication, présenter, en raison de chocs ou du montage lui-même, des défauts de configuration esthétique ou de montage.

Le document DE-C-384035 décrit les charactéristiques techniques mentionnées dans le préambule de la revendication 1.

### EXPOSE DE L'INVENTION

L'objet assigné à l'invention vise donc à réaliser un nouvel appareil de cuisson sous pression pourvu de moyens de support d'un panier de cuisson ne présentant pas les inconvénients énumérés précédemment et permettant en particulier de réaliser une cuve particulièrement soignée sur le plan de la fabrication et sans pièce rapportée.

Un autre objet de l'invention vise à fournir un nouvel appareil de cuisson sous pression comportant des moyens de support du panier de cuisson qui sont obtenus de manière particulièrement simple et à faible coût.

Un autre objet de l'invention vise à fournir un nouvel appareil de cuisson sous pression comportant des moyens de support du panier de cuisson qui permettent de visualiser parfaitement le niveau d'un volume de liquide préétabli.

Les objets assignés à l'invention sont atteints à l'aide d'un appareil de cuisson sous pression comportant une cuve avec des poignées, un couvercle et des moyens de support d'un panier de cuisson, lesdits moyens étant disposés vers la partie supérieure de la cuve pour assurer une position haute du panier dans la cuve, caractérisé en ce que les moyens de support sont formés par des déformations localisés de la paroi pour constituer au moins deux séries opposées d'extensions radiales internes de la paroi.

### DESCRIPTIF SOMMAIRE DES DESSINS

D'autres objets et détails de l'invention seront explicités plus en détail à la lumière de la description qui suit et des dessins annexés ci-après, donnés à titre purement illustratif et non limitatif, dans lesquels :
- la figure 1 montre, selon une vue en coupe transversale longitudinale, un appareil de cuisson sous pression conforme à l'invention dans lequel le panier de cuisson est en position haute.
- la figure 2 montre, selon une vue de dessus analogue à celle de la figure 1, un appareil de cuisson sous pression conforme à l'invention et dans lequel le panier de cuisson est en position haute.
- la figure 3 montre, selon une vue en coupe transversale longitudinale, un appareil de cuisson sous pression conforme à l'invention dans lequel le panier de cuisson est en position basse de cuisson immergée.
- la figure 4 montre, selon une vue de dessus analogue à celle de la figure 3, un appareil de cuisson sous pression dans lequel le panier de cuisson est en position basse.
- la figure 5 montre, selon une vue de dessus partielle, un détail de réalisation d'une première variante des moyens de support conforme à l'invention.
- la figure 6 montre, selon une vue de dessus partielle, un détail de réalisation d'une seconde variante de réalisation des moyens de support conforme à l'invention.

### MEILLEURE MANIERE DE REALISER L'INVENTION

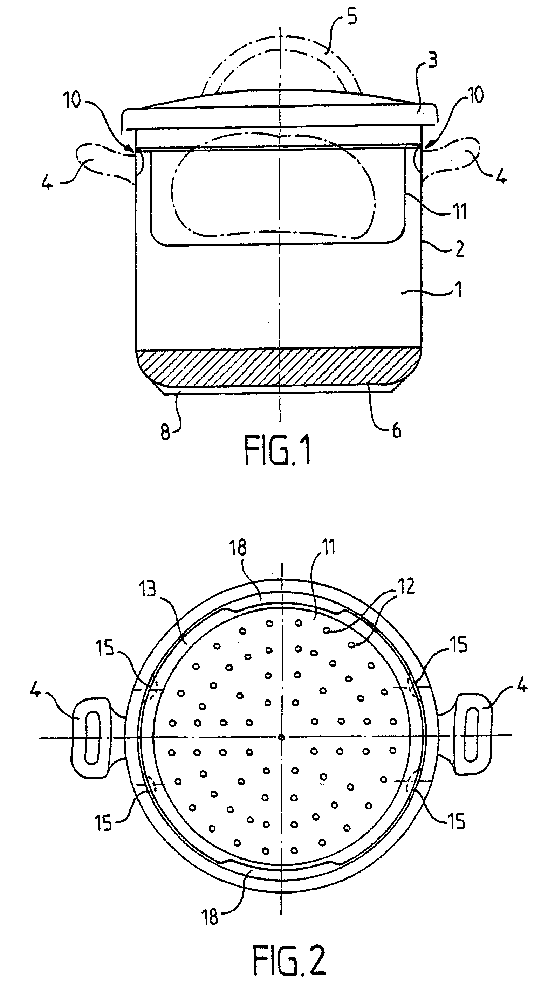

Les figures 1 à 6 illustrent un appareil de cuisson sous pression, en particulier un autocuiseur, de préférence à fermeture à baïonnettes. De manière classique, l'autocuiseur qui est illustré comprend une cuve 1, généralement cylindrique, délimitée par une paroi 2 de cuve comportant dans sa partie supérieure une série de rampes de cuve (non montrées aux figures) pour former avec un couvercle 3, également pourvu, à sa périphérie, de rampes de couvercle (non représentées aux figures), un appareil de cuisson sous pression à fermeture à baïonnettes. Le couvercle 3 est par ailleurs destiné à être rapporté de manière étanche, par exemple par interposition d'un joint élastique sur la cuve 1 de manière à permettre, lors de l'utilisation, la montée en pression de l'appareil à une pression supérieure à la pression atmosphérique.

La cuve 1 et le couvercle 3 sont, de manière connue, réalisés à partir de matériaux métalliques, du genre acier inoxydable ou aluminium, et par exemple par emboutissage.

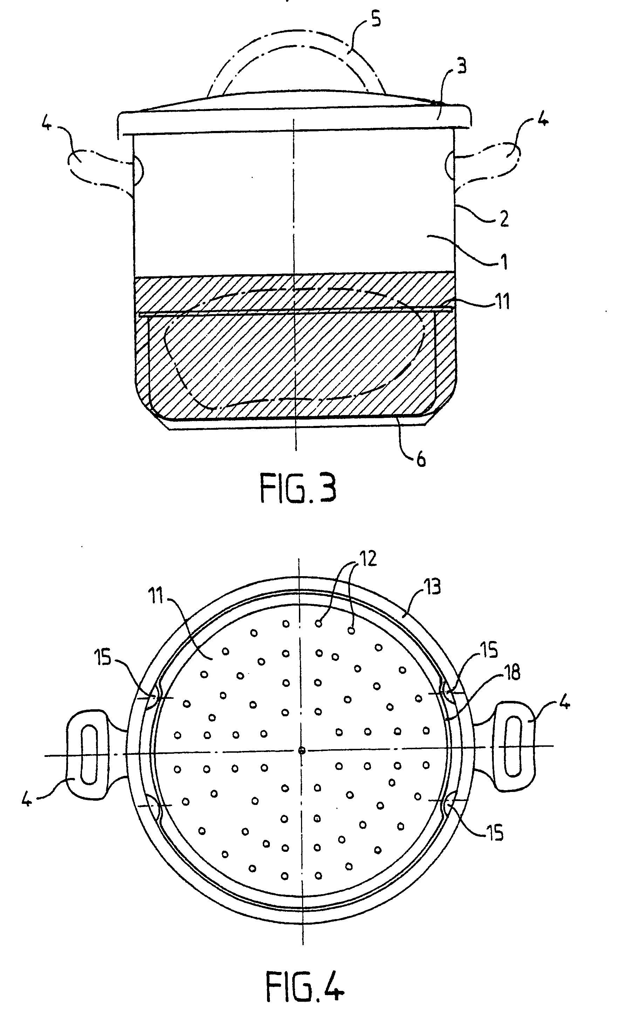

Pour sa manipulation, l'autocuiseur est équipé d'organes de préhension, et, par exemple, de poignées 4 solidaires de la face externe de la paroi 2 et fixées en opposition. Dans l'exemple d'autocuiseur illustré aux figures 1 et 3, le couvercle 3 est également pourvu, sur sa face supérieure externe, d'une poignée 5 de couvercle servant à la préhension du couvercle 3 et à sa mise en rotation.

La cuve 1 est également pourvue d'un fond 6 destiné à servir d'interface avec les moyens de chauffe et comportant à cet effet un disque 8 conducteur de chaleur rapporté par exemple par frappe à chaud.

L'autocuiseur conforme à l'invention comporte également des moyens de support 10 destinés à supporter un panier de cuisson 11 réalisé sous la forme d'un panier généralement cylindrique, de dimensions inférieures à celles de la cuve 1 pour pouvoir y être inséré. Le panier de cuisson 11 est, de manière classique, réalisé en un matériau métallique et comporte des perforations 12 dans son fond et dans ses parois latérales. La partie supérieure du panier de cuisson 1 est formée par un rebord périphérique 13 dirigée vers l'extérieur du panier 1 et prolongeant les parois latérales dudit panier.

Les moyens de support 10 sont disposés vers la partie supérieure de la cuve 1 de manière à pouvoir assurer au panier de cuisson 12 une position haute dans ladite cuve, tel qu'illustré aux figures 1 et 2, position dans laquelle le panier de cuisson 1 pose en appui sur les moyens de support 10 à distance du fond 6, et, par exemple, à une distance de l'ordre de quelques centimètres. Dans tous les cas, cette distance doit être suffisante pour qu'une cuisson à la vapeur des aliments stockés dans le panier de cuisson 12 puisse avoir lieu sans que les aliments soient au contact du liquide contenu dans la cuve 1.

Selon l'invention, les moyens de support 10 sont formés par des déformations localisées de la paroi 2 pour constituer au moins deux séries opposées d'extensions radiales internes de la paroi 2.

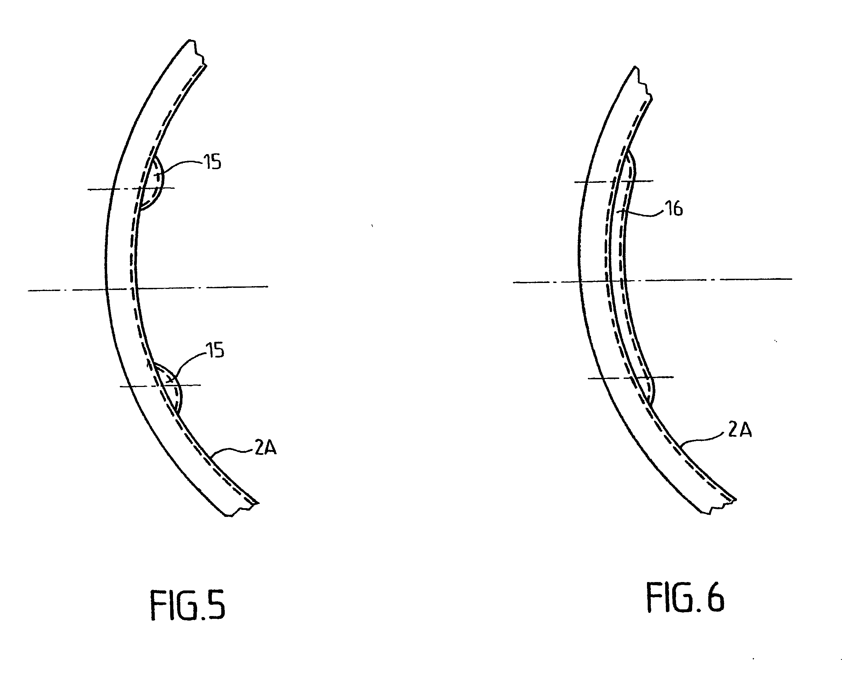

Tel qu'illustré en particulier à la figure 5, les moyens de support 10 peuvent être constitués par des bossettes ponctuelles, de préférence circulaires ou sensiblement oblongues, et formant des calottes hémisphériques s'étendant radialement vers l'intérieur de la cuve à partir de la face interne 2A de la paroi 2 de cuve. Selon cette réalisation, les bossettes ponctuelles 15 présentent une face concave tournée vers l'extérieur de l'autocuiseur et une face convexe tournée vers l'intérieur de la cuve 1.

Tel qu'illustré aux figures 4 et 5, les bossettes ponctuelles 15 sont, de manière préférentielle, constituées par deux séries de deux bossettes ponctuelles associées par paire diamétralement opposées relativement au centre de l'autocuiseur, et distantes au sein de chaque paire de quelques centimètres.

Les déformations localisées, en l'occurrence les bossettes ponctuelles 15 par exemple, sont obtenues par opérations de pressage réalisées à partir de ia face externe de la paroi 2 de cuve, permettant ainsi un enfonçage de la paroi 2 de cuve.

Selon une autre variante de réalisation, telle que montrée à la figure 6, les déformations peuvent être des bossettes linéaires, suivant la courbure de la cuve 1, et s'étendant sur une distance périphérique de plusieurs centimètres, et sensiblement équivalentes à la distance entre deux bossettes ponctuelles, tel qu'illustré à la figure 5. Les bossettes linéaires 16 sont par exemple au nombre de deux et diamétralement opposées relativement au centre de l'autocuiseur.

La réalisation de déformations localisées dans l'épaisseur de la paroi 2 de cuve permet de définir des faces externes creuses dans ladite paroi externe qui peuvent servir de siège de réception à la fixation des poignées 4 de cuve 1. Grâce à cette particularité, il est ainsi possible d'assurer la fixation des poignées de l'autocuiseur sans avoir recours à des moyens annexes de fixation et tout en préservant un bon aspect esthétique extérieur.

Dans sa position haute de cuisson, le panier 11 repose en appui sur les bossettes ponctuelles 15 ou sur les bossettes linéaires 16 par l'intermédiaire de son rebord périphérique 13 (figures 1 et 2).

Pour permettre à l'utilisateur de positionner le panier de cuisson 11 dans une position basse contre le fond 6, le rebord périphérique 13 est pourvu d'au moins deux dégagements 18 (figure 2). Ainsi, par rotation du panier 11, l'utilisateur peut, en amenant les dégagements 18 au droit et à l'aplomb des moyens de support 10, assurer le passage du panier 11 au-delà de sa position haute en escamotant les moyens de support 10. Le panier de cuisson 11 peut alors occuper la position illustrée aux figures 3 et 4, ce qui permet d'assurer une cuisson d'aliments par immersion.

L'invention permet en conséquence de réaliser de manière simple des moyens de support du panier de cuisson qui, tout en évitant le perçage de la paroi 2 de cuve, permettent de lui conférer un aspect visuel interne particulièrement esthétique. En outre, le recours à des déformations sensiblement linéaires permet d'utiliser les moyens de support 10 en tant qu'indicateur de niveau de liquide dans la cuve, la forme linéaire des moyens de support 10 se prêtant particulièrement bien à cette fonction.

### POSSIBILITE D'APPLICATION INDUSTRIELLE

L'invention trouve son application industrielle dans la fabrication de paniers de cuisson et d'appareils de cuisson sous pression, du genre autocuiseurs.

## Revendications

1. Appareil de cuisson sous pression comportant une cuve (1) avec des poignées (4), un couvercle (3) et des moyens de support (10) d'un panier de cuisson (11), les dits moyens (10) étant disposés vers la partie supérieure de la cuve (1) pour assurer une position haute du panier (11) dans la cuve (1), **caractérisé en ce que** les moyens de support (10) sont formés par des déformations localisées de la paroi pour constituer au moins deux séries opposées d'extensions radiales internes de la paroi (2).

2. Appareil selon la revendication 1 **caractérisé en ce que** les déformations sont des bossettes ponctuelles (15).

3. Appareil selon la revendication 2 **caractérisé en ce que** les bossettes ponctuelles (15) sont constituées par deux séries de deux bossettes diamétralement opposées.

4. Appareil selon la revendication 1 **caractérisé en ce que** les déformations sont des bossettes linéaires (16) suivant la courbure de la cuve (1).

5. Appareil selon la revendication 4 **caractérisé en ce que** les bossettes linéaires (16) sont constituées par deux bossettes diamétralement opposées.

6. Appareil selon l'une des revendications 1 à 5 **caractérisé en ce que** les moyens de support (10) servent d'indicateur de niveau de liquide dans la cuve.

7. Appareil selon l'une des revendications 1 à 6 **caractérisé en ce que** les déformations localisées sont obtenues par opération de pressage permettant un enfonçage de la paroi de la cuve.

8. Appareil selon l'une des revendications 1 à 7 **caractérisé en ce que** les déformations définissent des faces externes creuses dans la paroi externe de la cuve (1) qui servent de siège de réception à la fixation des poignées (4) de cuve.

## Patentansprüche

1. Druckkochgerät mit einem Topf (1) mit Handgriffen (4), einem Deckel (3) und Mitteln (10) zum Unterstützen eines Kochbehälters (11), wobei die Mittel (10) am oberen Abschnitt des Topfs (1) angeordnet sind, um eine hohe Position des Behälters (11) in dem Topf zu gewährleisten, **dadurch gekennzeichnet, dass** die Mittel (10) zum Unterstützen gebildet sind aus örtlichen Verformungen der Wand um mindestens zwei gegenüber liegende Reihen radialer, innerer Verformungen der Wand (2) zu bilden.

2. Gerät gemäß Anspruch 1, **dadurch gekennzeichnet, dass** die Verformungen punktuelle Hervorhebungen (15) sind.

3. Gerät gemäß Anspruch 2, **dadurch gekennzeichnet, dass** die punktuellen Hervorhebungen (15) gebildet sind aus zwei Reihen mit zwei diametral gegenüber liegenden Hervorhebungen.

4. Gerät gemäß Anspruch 1, **dadurch gekennzeichnet, dass** die Verformungen lineare Hervorhebungen (16) sind, die der Krümmung des Topfs (1) folgen.

5. Gerät gemäß Anspruch 4, **dadurch gekennzeichnet, dass** die linearen Hervorhebungen (16) gebildet sind aus zwei diametral gegenüber liegenden Hervorhebungen.

6. Gerät gemäß einem der Ansprüche 1 bis 5, **dadurch gekennzeichnet, dass** die Mittel (10) zum Unterstützen als Anzeiger des Flüssigkeitspegels im Topf dienen.

7. Gerät gemäß einem der Ansprüche 1 bis 6, **dadurch gekennzeichnet, dass** die örtlichen Verformungen hergestellt werden durch einen Druckvorgang, der das Eindrücken der Wand des Topfs ermöglicht.

8. Gerät gemäß einem der Ansprüche 1 bis 7, **dadurch gekennzeichnet, dass** die Verformungen äußere, hohle Flächen bilden in der äußeren Wand des Topfs (1), die als Aufnahmesitze für die Befestigung der Handgriffe (4) des Topfs dienen.

## Claims

1. Pressure cooking apparatus comprising a vessel (1) with handles (4), a lid (3) and means (10) for supporting a cooking basket (11), the said means (10) being disposed towards the top part of the vessel (1) in order to provide a high position of the basket (11) in the vessel (1), **characterised in that** the support means (10) are formed by localised deformations of the wall in order to constitute at least two opposite series of internal radial extensions of the wall (2).

2. Apparatus according to Claim 1, **characterised in that** the deformations are isolated bumps (15).

3. Apparatus according to Claim 2, **characterised in that** the isolated bumps (15) consist of two series of two diametrically opposed bumps.

4. Apparatus according to Claim 1, **characterised in that** the deformations are linear bumps (16) following the curvature of the vessel (1).

5. Apparatus according to Claim 4, **characterised in that** the linear bumps (16) consist of two diametrically opposed bumps.

6. Apparatus according to any of Claims 1 to 5, **characterised in that** the support means (10) serve as an indicator for the level of liquid in the vessel.

7. Apparatus according to any of Claims 1 to 6, **characterised in that** the localised deformations are obtained by a pressing operation for pressing in the wall of the vessel.

8. Apparatus according to any of Claims 1 to 7, **characterised in that** the deformations define hollow external faces in the external wall of the vessel (1) which serve as a reception seat for fixing the vessel handles (4).
